# FASCICULE DE BREVET EUROPEEN

(11) **EP 3 777 105 B1**
(45) Date de publication et mention de la délivrance du brevet: **18.05.2022**
(21) Numéro de dépôt: 19718792.5
(22) Date de dépôt: 22.03.2019
(51) Int. Cl.: H04L 67/00, G06F 8/65, H04W 4/44

(54) **PROCÉDÉ DE MISE A JOUR Ã DISTANCE D'UN LOGICIEL EMBARQUÉ DE VÉHICULE**
VERFAHREN ZUR ENTFERNTEN AKTUALISIERUNG DER FAHRZEUG-BORD-SOFTWARE
METHOD FOR REMOTELY UPDATING VEHICLE ONBOARD SOFTWARE

(30) Priorité: 06.04.2018 FR 1853001
(43) Date de publication de la demande: 17.02.2021
(73) Titulaire: PSA AUTOMOBILES SA, 78300 Poissy (FR)
(72) Inventeur: DEJEAN, Amira, 78140 VELIZY VILLACOUBLAY (FR); DISABLEU, Arnauld, 95150 TAVERNY (FR); FOCQUEUR, Jeremie, 95120 ERMONT (FR); GUYOT, Nicolas, 78280 GUYANCOURT (FR)
(86) Numéro de dépôt international: PCT/FR2019/050661
(87) Numéro de publication internationale: WO 2019/193265

(56) Documents cités:
- US-A1- 2014 173 584
- US-A1- 2016 098 266
- US-A1- 2017 242 678

## Description

La présente invention concerne de manière générale un procédé de mise à jour à distance d'un logiciel embarqué sur un véhicule automobile.

Il est connu dans l'art antérieur des méthodes de mise à jour de logiciels embarqués. Par exemple, le document KR101091464 décrit un procédé de mise à jour sans fil. L'état de charge de la batterie est vérifié suite à la réception d'un message d'un serveur distant pour une mise à jour. Si les conditions de charge de la batterie ne satisfont pas une condition prédéterminée, alors le message de mise à jour est stocké en mémoire au lieu d'être affiché. Cependant, ce document ne propose aucune solution pour effectuer une mise à jour économe en énergie.

Le document US 2017/242678 décrit un système où des mises à jour logicielles sont effectuées lorsque le véhicule n'est pas utilisé.

Le document US 2016/098266 décrit un système où les mises à jour se font à l'aide d'une, EEPROM supplémentaire.

Un but de la présente invention est de répondre aux inconvénients de l'art antérieur mentionnés ci-dessus et en particulier, tout d'abord, de proposer un procédé de mise à jour de logiciel embarqué d'un véhicule, qui minimise les besoins en énergie, de sorte à laisser le véhicule avec une réserve d'énergie optimale (pour démarrer à nouveau ou permettre une réinstallation du logiciel selon sa configuration initiale, si une erreur intervient).

Pour cela, un premier aspect de l'invention concerne un procédé de mise à jour à distance d'un logiciel embarqué dans une unité de stockage informatique d'un véhicule comprenant au moins une interface homme machine avec un afficheur, le procédé comprenant les étapes consistant à :
- détecter une présence d'un occupant dans le véhicule,
- si aucun occupant n'est présent dans le véhicule, alors le procédé effectue la mise à jour à distance et comprend une étape d'utilisation de l'afficheur de l'interface homme machine selon un mode économique. Le procédé selon l'invention, lorsque l'occupant n'est pas dans le véhicule, effectue la mise à jour selon un mode d'affichage économique, c'est-à-dire sans afficher les traditionnelles informations sur la progression de mise à jour. En d'autres termes, le procédé comprend une étape consistant à vérifier que le véhicule est vide, et alors, dans ce contexte et en cours de mise à jour, aucune information sur la progression ou l'état de la mise à jour n'est affichée, ce qui économise les réserves d'énergie (batteries) du véhicule. Cela permet de disposer d'une réserve d'énergie supplémentaire s'il faut recommencer une autre mise à jour, ou revenir à la version précédemment installée (roll back en langue anglaise) en cas d'erreur ou incompatibilité détectée.

Avantageusement, au cours de l'étape d'utilisation de l'afficheur de l'interface homme machine selon le mode économique, l'afficheur n'est utilisé :
- que pour afficher un rapport final de mise à jour sur ladite au moins une interface homme machine, par exemple au retour d'un occupant dans le véhicule, et/ou
- que si un occupant rentre dans le véhicule avant la fin de la mise à jour. En effet, seul un rapport final est affiché, idéalement seulement au retour d'un occupant dans le véhicule. Cependant, si un occupant rentre dans le véhicule en cours de mise à jour selon le mode économique, alors le procédé peut comprendre une étape d'affichage pour informer l'occupant de la mise à jour en cours.

Autrement dit, la mise à jour est effectuée sans envoyer, au cours de la mise à jour, de message informatif d'un état ou d'une progression de mise à jour sur ladite au moins une interface homme machine.

Autrement dit, la mise à jour est effectuée en laissant toutes les unités d'interface homme machine du véhicule inactives.

Avantageusement, l'étape consistant à détecter une présence dans le véhicule comprend :
- une étape consistant à détecter une action de verrouillage du véhicule lorsqu'il est à l'arrêt, et/ou
- une étape consistant à envoyer un message interrogatif sur ladite au moins une unité d'interface homme machine et à ne pas recevoir de réponse dans un temps prédéterminé, et/ou,
- une étape consistant à vérifier un état d'inoccupation des sièges du véhicule, et/ou
- une étape consistant à vérifier une absence d'une clé de démarrage dans le véhicule.

Avantageusement, l'étape consistant à détecter une présence dans le véhicule conduit à considérer le véhicule sans occupant si :
- l'étape consistant à envoyer un message interrogatif sur ladite au moins une unité d'interface homme machine n'a pas reçu de réponse dans un temps prédéterminé (par exemple une minute), et si
- l'étape consistant à vérifier une présence d'une clé de démarrage dans le véhicule se conclut par une absence de clé dans le véhicule (pas de présence de clé dans un barillet de colonne de direction, ou pas de détection de clé de démarrage sans contact dans l'habitacle).

Alternativement, on peut considérer le véhicule sans occupant si tous les sièges sont équipés de capteur de présence occupant, et si aucun des capteurs de présence occupant n'est activé.

Avantageusement, le procédé de mise à jour comprend une étape initiale de connexion à un serveur distant, et de réception d'une demande de mise à jour.

Avantageusement, l'étape de mise à jour est effectuée uniquement lorsque le véhicule est à l'arrêt.

Avantageusement, si un occupant est présent dans le véhicule, alors la mise à jour :
- est repoussée si elle ne comporte pas de caractère prioritaire, et l'étape de détection de présence est réitérée après la détection d'une ouverture de porte et/ou d'un verrouillage du véhicule ;
- est tout de même effectuée si elle comporte un caractère prioritaire.

Avantageusement, si un occupant est présent dans le véhicule, alors la mise à jour est précédée d'une étape consistant à vérifier un niveau d'énergie disponible dans le véhicule, et le procédé comprend une étape d'affichage d'une invitation à effectuer la mise à jour en affichant uniquement un rapport final de mise à jour sur ladite au moins une interface homme machine, si le niveau d'énergie disponible dans le véhicule est insuffisant pour effectuer la mise à jour avec une utilisation de ladite au moins une interface homme machine au cours de la mise à jour. En d'autres termes, si un occupant est présent, il peut décider de lancer la mise à jour en utilisant un mode de mise à jour dit économique (sans retour d'information au cours de la mise à jour).

Avantageusement, l'étape de mise à jour est précédée d'une étape consistant à vérifier un niveau d'énergie disponible dans le véhicule, et l'étape de mise à jour est effectuée uniquement lorsque le niveau d'énergie disponible est supérieur à une réserve minimale prédéterminée.

Avantageusement, le procédé de mise à jour comprend une étape de réinstallation de la version initiale du logiciel, si une erreur ou incompatibilité est détectée lors de la mise à jour.

Avantageusement, l'étape de mise à jour est réalisée en établissant une connexion sans fil avec un serveur distant. La mise à jour est téléchargée par une connexion sans fil (par ondes radio).

Un second aspect de l'invention concerne un support mémoire lisible par ordinateur, avec un programme d'ordinateur agencé pour faire exécuter le procédé de l'une des revendications précédentes par une unité de calcul.

Un troisième aspect de l'invention concerne un véhicule automobile, comprenant au moins un support mémoire lisible par ordinateur, avec un programme d'ordinateur agencé pour faire exécuter le procédé de mise à jour selon le premier aspect de l'invention par une unité de calcul du véhicule. En d'autres termes, la mise en oeuvre du procédé est locale, c'est-à-dire que toutes les étapes de décision sont mises en oeuvre par le véhicule, ce qui évite de communiquer avec le serveur distant.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :

- la figure 1 représente un véhicule avec un organe géré par un logiciel qui doit être mis à jour selon le procédé de la présente invention ;

- la figure 2 représente un schéma des étapes mises en œuvre par le procédé de la présente invention.

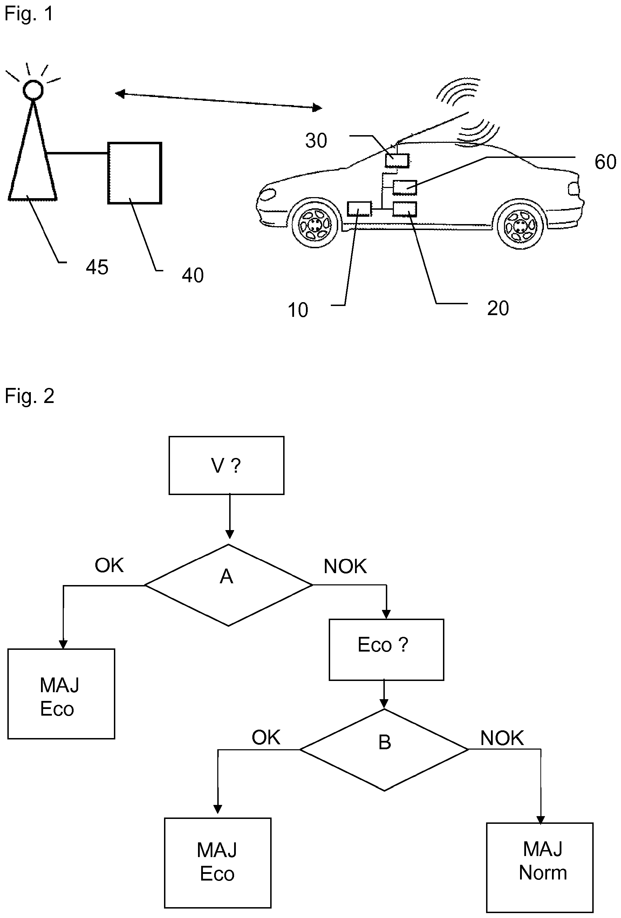

La figure 1 représente un véhicule comprenant un organe 10 (par exemple un dispositif d'injection, un système multimédia embarqué, un dispositif de géolocalisation intégré au véhicule...) qui est géré ou piloté par un logiciel stocké dans une unité de stockage informatique 20.

Le véhicule comprend aussi une interface homme machine 60 avec un afficheur qui permet d'afficher notamment des informations multimédia, des paramètres ou informations du véhicule... Typiquement, l'interface homme machine 60 est un écran tactile placé sur la planche de bord ou sur la console centrale pour afficher des messages ou informations à l'attention du conducteur ou des occupants du véhicule.

En raison d'évolutions techniques, ou pour mettre en place des lois de commande tenant compte de retour d'expérience, il peut être nécessaire de faire évoluer la version du logiciel qui pilote cet organe 10, par une mise à jour de la version antérieure (installée) vers une version actuelle (à installer donc).

A cet effet, le véhicule comprend une unité de liaison sans fil 30 qui permet de se connecter à un serveur distant 40 via par exemple une antenne relais téléphonique 45, pour télécharger une nouvelle version de ce logiciel et l'installer dans l'unité de stockage informatique 20.

L'invention propose de faire cette mise à jour en minimisant les besoins énergétiques. En effet, il peut être décidé de faire les mises à jour seulement lorsque le véhicule est à l'arrêt, sur ses seules réserves énergétiques stockées dans les batteries.

En particulier, comme le montre la figure 2, le procédé peut commencer par vérifier si le véhicule est vide (V?). Pour ce faire, le procédé peut vérifier qu'aucune clé de démarrage n'est présente dans le véhicule, et envoyer une question (demande de validation présence par exemple) sur l'interface homme machine 60, et qu'aucune réponse n'est reçue par exemple au bout d'une minute.

A l'étape A, si le véhicule est vide, alors le procédé effectue la mise à jour en suivant un mode de fonctionnement économique (MAJ Eco). En particulier, le procédé effectue la mise à jour sans envoyer de message de suivi de progression ou d'état de la mise à jour sur l'interface homme machine 60. Autrement dit l'interface homme machine 60 reste éteinte dans ce contexte de véhicule sans occupant, ainsi que tous les autres afficheurs éventuels du véhicule.

Seul un message final indiquant qu'une mise à jour a été effectuée est affiché, par exemple au démarrage suivant, ou lorsque l'occupant rentre à nouveau dans le véhicule. Il s'ensuit que la mise à jour n'a pas consommé d'énergie pour garder un afficheur allumé.

Si par contre le véhicule n'est pas vide, alors, le procédé peut envoyer une demande de validation à l'occupant pour effectuer la mise à jour en mode économique ou non (Eco ?).

Si l'occupant valide cette demande, alors le procédé peut passer à l'étape B et effectuer la mise à jour selon un mode économique (MAJ Eco), c'est-à-dire en n'envoyant qu'un message de rapport final sur l'afficheur de l'interface homme machine 60.

Si l'occupant ne valide pas cette demande, alors à l'étape B, le procédé peut effectuer la mise à jour en affichant constamment ou à plusieurs reprises, au cours de la mise à jour, un état ou une progression de cette mise à jour (MAJ Norm).

Bien entendu, le procédé peut également vérifier si le véhicule dispose de suffisamment de réserve d'énergie électrique, et proposer des stratégies particulières en fonction de la réserve d'énergie disponible.

En particulier, toute mise à jour peut être repoussée si la réserve d'énergie est insuffisante, même en mode économique (réserve inférieure à une réserve minimale). Le procédé peut aussi repousser la mise à jour, ou forcer une mise à jour en mode économique si la réserve d'énergie est suffisante pour effectuer la mise en jour sans utiliser l'afficheur au cours de la mise à jour, mais insuffisante pour effectuer la mise à jour en utilisant l'afficheur au cours de la mise à jour.

Le procédé peut aussi proposer une stratégie particulière en fonction du caractère prioritaire de la mise à jour : si cette dernière présente un caractère prioritaire (mise à jour réglementaire, ou d'un organe de sécurité), alors cette mise à jour est effectuée sans être repoussée, qu'il y ait un occupant, ou que cela soit nécessaire de l'effectuer en mode économique.

Si par contre, la mise à jour n'est pas prioritaire, alors le procédé peut décider de la repousser pour l'effectuer en mode économique lorsque le véhicule sera vide. Il suffit de réitérer l'étape de détection d'absence d'occupant à un moment ultérieure (si une portière s'ouvre et se ferme, si une occupation de siège passe de « occupé » à « non occupé », si une clé de démarrage n'est plus détectée dans le véhicule), et si le véhicule est détecté vide d'occupant, alors la mise à jour peut intervenir.

On comprendra que diverses modifications et/ou améliorations évidentes pour l'homme du métier peuvent être apportées aux différents modes de réalisation de l'invention décrits dans la présente description sans sortir du cadre de l'invention.

## Revendications

1. Procédé de mise à jour à distance d'un logiciel embarqué dans une unité de stockage informatique (20) d'un véhicule comprenant au moins une interface homme machine (60) avec un afficheur, le procédé comprenant les étapes consistant à :
- détecter une présence d'un occupant dans le véhicule,
- si aucun occupant n'est présent dans le véhicule, alors le procédé effectue la mise à jour à distance et comprend une étape d'utilisation de l'afficheur de l'interface homme machine (60) selon un mode économique, et
dans lequel au cours de l'étape d'utilisation de l'afficheur de l'interface homme machine (60) selon le mode économique, l'afficheur n'est utilisé :
- que pour afficher un rapport final de mise à jour sur ladite au moins une interface homme machine (60), par exemple au retour d'un occupant dans le véhicule, et/ou
- que si un occupant rentre dans le véhicule avant la fin de la mise à jour.

2. Procédé de mise à jour selon l'une des revendications précédentes, dans lequel l'étape consistant à détecter une présence dans le véhicule comprend :
- une étape consistant à détecter une action de verrouillage du véhicule lorsqu'il est à l'arrêt, et/ou
- une étape consistant à envoyer un message interrogatif sur ladite au moins une unité d'interface homme machine (60) et à ne pas recevoir de réponse dans un temps prédéterminé, et/ou,
- une étape consistant à vérifier un état d'inoccupation des sièges du véhicule, et/ou
- une étape consistant à vérifier une absence d'une clé de démarrage dans le véhicule.

3. Procédé de mise à jour selon l'une des revendications précédentes, comprenant une étape initiale de connexion à un serveur distant, et de réception d'une demande de mise à jour.

4. Procédé de mise à jour selon l'une des revendications précédentes, dans lequel l'étape de mise à jour est effectuée uniquement lorsque le véhicule est à l'arrêt.

5. Procédé de mise à jour selon l'une des revendications précédentes, dans lequel, si un occupant est présent dans le véhicule, alors la mise à jour :
- est repoussée si elle ne comporte pas de caractère prioritaire, et l'étape de détection de présence est réitérée après la détection d'une ouverture de porte et/ou d'un verrouillage du véhicule ;
- est tout de même effectuée si elle comporte un caractère prioritaire.

6. Procédé de mise à jour selon l'une des revendications précédentes, dans lequel, si un occupant est présent dans le véhicule, alors la mise à jour est précédée d'une étape consistant à vérifier un niveau d'énergie disponible dans le véhicule, et le procédé comprend une étape d'affichage d'une invitation à effectuer la mise à jour en affichant uniquement un rapport final de mise à jour sur ladite au moins une interface homme machine (60), si le niveau d'énergie disponible dans le véhicule est insuffisant pour effectuer la mise à jour avec une utilisation de ladite au moins une interface homme machine (60) au cours de la mise à jour.

7. Procédé de mise à jour selon l'une des revendications précédentes, dans lequel l'étape de mise à jour est précédée d'une étape consistant à vérifier un niveau d'énergie disponible dans le véhicule, et dans lequel l'étape de mise à jour est effectuée uniquement lorsque le niveau d'énergie disponible est supérieur à une réserve minimale prédéterminée.

8. Procédé de mise à jour selon l'une des revendications précédentes, comprenant une étape de réinstallation de la version initiale du logiciel, si une erreur ou incompatibilité est détectée lors de la mise à jour.

9. Véhicule automobile, comprenant au moins un support mémoire lisible par ordinateur, avec un programme d'ordinateur agencé pour faire exécuter le procédé de l'une des revendications précédentes par une unité de calcul du véhicule.

## Patentansprüche

1. Verfahren zur Fernaktualisierung von Software, die in einer Computerspeichereinheit (20) eines Fahrzeugs eingebettet ist, das mindestens eine Mensch-Maschine-Schnittstelle (60) mit einem Display umfasst, wobei das Verfahren die folgenden Schritte umfasst: :
- Erfassen der Anwesenheit eines Insassen in dem Fahrzeug,
- wenn kein Insasse im Fahrzeug anwesend ist, dann führt das Verfahren die Fernaktualisierung durch und umfasst einen Schritt der Verwendung des Displays der Mensch-Maschine-Schnittstelle (60) gemäß einem Sparmodus, und
wobei während des Schritts der Verwendung der Anzeige der Mensch-Maschine-Schnittstelle (60) gemäß dem Sparmodus die Anzeige nur :
- nur zum Anzeigen eines abschließenden Aktualisierungsberichts auf der mindestens einen Mensch-Maschine-Schnittstelle (60), z. B. bei der Rückkehr eines Insassen in das Fahrzeug, und/oder
- nur, wenn ein Insasse vor dem Ende der Aktualisierung in das Fahrzeug zurückkehrt.

2. Aktualisierungsverfahren nach einem der vorhergehenden Ansprüche, wobei der Schritt des Erfassens einer Anwesenheit im Fahrzeug umfasst:
- einen Schritt des Erfassens einer Verriegelungsaktion des Fahrzeugs, wenn es sich im Stillstand befindet, und/oder
- einen Schritt des Sendens einer abfragenden Nachricht an die mindestens eine Mensch-Maschine-Schnittstelleneinheit (60) und des Nicht-Empfangens einer Antwort innerhalb einer vorbestimmten Zeit, und/oder,
- einen Schritt zum Überprüfen eines Nichtbelegungszustands der Fahrzeugsitze, und/oder
- einen Schritt, bei dem eine Abwesenheit eines Startschlüssels im Fahrzeug überprüft wird.

3. Verfahren zum Aktualisieren nach einem der vorhergehenden Ansprüche, das einen Anfangsschritt des Verbindens mit einem entfernten Server und des Empfangens einer Aktualisierungsanfrage umfasst.

4. Aktualisierungsverfahren nach einem der vorhergehenden Ansprüche, wobei der Aktualisierungsschritt nur bei stehendem Fahrzeug durchgeführt wird.

5. Aktualisierungsverfahren nach einem der vorhergehenden Ansprüche, wobei, wenn sich ein Insasse im Fahrzeug befindet, dann die Aktualisierung :
- verschoben wird, wenn sie keine Priorität hat, und der Schritt der Anwesenheitserkennung nach der Erkennung einer Türöffnung und/oder einer Verriegelung des Fahrzeugs wiederholt wird ;
- trotzdem durchgeführt wird, wenn er eine Priorität enthält.

6. Aktualisierungsverfahren nach einem der vorhergehenden Ansprüche, wobei, wenn ein Insasse im Fahrzeug anwesend ist, dann geht der Aktualisierung ein Schritt voraus, in dem ein im Fahrzeug verfügbarer Energiepegel überprüft wird, und das Verfahren einen Schritt des Anzeigens einer Aufforderung zur Durchführung der Aktualisierung umfasst, indem nur ein abschließender Aktualisierungsbericht auf der mindestens einen Mensch-Maschine-Schnittstelle (60) angezeigt wird, wenn das verfügbare Energieniveau in dem Fahrzeug nicht ausreicht, um die Aktualisierung mit einer Verwendung der mindestens einen Mensch-Maschine-Schnittstelle (60) während der Aktualisierung durchzuführen.

7. Verfahren zum Aktualisieren nach einem der vorhergehenden Ansprüche, wobei dem Schritt des Aktualisierens ein Schritt des Überprüfens eines verfügbaren Energieniveaus in dem Fahrzeug vorausgeht, und wobei der Schritt des Aktualisierens nur dann durchgeführt wird, wenn das verfügbare Energieniveau größer als eine vorbestimmte Mindestreserve ist.

8. Verfahren zum Aktualisieren nach einem der vorhergehenden Ansprüche, umfassend einen Schritt zum erneuten Installieren der ursprünglichen Version der Software, wenn bei der Aktualisierung ein Fehler oder eine Inkompatibilität festgestellt wird.

9. Kraftfahrzeug, umfassend mindestens ein computerlesbares Speichermedium, mit einem Computerprogramm, das dazu eingerichtet ist, das Verfahren nach einem der vorhergehenden Ansprüche durch eine Recheneinheit des Fahrzeugs ausführen zu lassen.

## Claims

1. A method of remotely updating on-board software in a computer storage unit (20) of a vehicle comprising at least one human machine interface (60) with a display, the method comprising the steps of:
- detecting a presence of an occupant in the vehicle,
- if no occupant is present in the vehicle, then the method performs the remote update and includes a step of using the display of the human machine interface (60) in an economy mode, and
wherein during the step of using the human machine interface display (60) according to the economy mode, the display is used :
- only to display a final update report on the at least one man-machine interface (60), e.g. when an occupant returns to the vehicle, and/or
- if an occupant returns to the vehicle before the update is complete.

2. The updating method according to any of the preceding claims, wherein the step of detecting a presence in the vehicle comprises:
- a step of detecting a locking action of the vehicle when it is stationary, and/or
- a step of sending an interrogative message to said at least one man-machine interface unit (60) and not receiving a response within a predetermined time, and/or
- a step of checking an unoccupied state of the vehicle seats, and/or
- a step of checking for an absence of a start key in the vehicle.

3. A method of updating according to any of the preceding claims, comprising an initial step of connecting to a remote server, and receiving an update request.

4. An updating method according to any of the preceding claims, wherein the updating step is performed only when the vehicle is stationary.

5. A method of updating according to any of the preceding claims, wherein, if an occupant is present in the vehicle, then the updating :
- is postponed if it does not involve priority, and the presence detection step is repeated after detection of a door opening and/or locking of the vehicle;
- is still performed if it has priority.

6. A method of updating according to any of the preceding claims, wherein, if an occupant is present in the vehicle, then the updating is preceded by a step of checking a level of available energy in the vehicle, and the method comprises a step of displaying a prompt to perform the update by displaying only a final update report on said at least one human machine interface (60), if the available energy level in the vehicle is insufficient to perform the update with use of said at least one human machine interface (60) during the update.

7. The method of updating according to any of the preceding claims, wherein the step of updating is preceded by a step of checking a level of available energy in the vehicle, and wherein the step of updating is performed only when the level of available energy is higher than a predetermined minimum reserve.

8. The method of updating according to any of the preceding claims, comprising a step of reinstalling the initial version of the software, if an error or incompatibility is detected during the updating.

9. A motor vehicle, comprising at least one computer-readable storage medium, with a computer program arranged to cause the method of any of the preceding claims to be executed by a computing unit of the vehicle..
